# EUROPÄISCHE PATENTSCHRIFT

(11) **EP 1 553 359 B1**
(45) Veröffentlichungstag und Bekanntmachung des Hinweises auf die Patenterteilung: **15.02.2012**
(21) Anmeldenummer: 04030788.6
(22) Anmeldetag: 27.12.2004
(51) Int. Cl.: F24F 11/04, F24F 13/14

(54) **Vorrichtung zum Führen eines Luftstroms**
Device for guiding an air flow
Dispositif de guidage d'un flux d'air

(30) Priorität: 12.01.2004 DE 102004001785; 28.07.2004 DE 102004036674
(43) Veröffentlichungstag der Anmeldung: 13.07.2005
(73) Patentinhaber: Schako Klima Luft Ferdinand Schad KG, 78600 Kolbingen (DE)
(72) Erfinder: Müller, Rainer, 78600 Kolbingen (DE)
(74) Vertreter: Weiss, Peter

(56) Entgegenhaltungen:
- EP-A- 0 466 455
- EP-A- 0 621 452
- CH-A- 551 043
- US-A- 5 582 203

## Beschreibung

Die Erfindung betrifft eine Vorrichtung zum Führen eines Luftstroms in einem Strömungskanal gemäß dem Oberbegriff von Anspruch 1.

### Stand der Technik

Volumenstromregler gibt es in vielfältiger Form und Ausführung. Aus der DE 93 03 288 U ist beispielsweise ein Luftführungssystem mit einem Rohrabschnitt bekannt, in welchem eine um eine Drehachse drehbar gelagerte Drosselklappe angeordnet ist, wobei der Drehachse ein Kraftspeicher zugeordnet ist, der die Drosselklappe gegen einen Luftstrom in Öffnungslage bewegt. Ein ähnliches Luftführungssystem ist auch in der DE 41 25 623 A gezeigt.

Die in den bekannten Luftführungssystemen verwendete Drosselklappe hat den Nachteil, dass sie sich sowohl in Öffnung- als auch in Schliesslage im Luftstrom befindet, sodass Immer eine Störung des Luftstromes stattfindet. In der Regel führt dies auch zu zusätzlichen Strömung- bzw. Abstrahlgeräuschen.

Beispielsweise offenbart die gattungsgemäße EP 0 4t38 455 A2 eine Lüftungsvorrichtung. Bei dieser Vorrichtung ist zum Führen des Luftstroms eine Klappe in einem Querschnitt des Strömungskanals einschwenkbar.

Ähnliche Vorrichtungen, bei denen Klappen zur Führung eines Luftstroms in einen freien Querschnitts des Strömungskanals einschwenkbar sind, zeigen auch die CH 551 043 und die EP 0 621 452 A1.

### Aufgabe

Der vorliegenden Erfindung liegt die Aufgabe zu Grunde, einen Luftstrom in einem Luftführungssystem mit einem Regelelement zu regulieren, mit dem zwar das Volumen des Luftstromes veränderbar ist, das aber ansonsten den Luftstrom nicht beeinträchtigt.

### Lösung der Aufgabe

Zur Lösung der Aufgabe führt, dass bei der gattungsgemäßen Vorrichtung eine gegen die Strömungsrichtung gerichtete freie Kante des Gehäuses abgerundet ist.

Damit bildet das Gehäuse, wenn es in den Strömungskanal eingesetzt ist, keinen Widerstand oder nur einen sanften Widerstand gegen den Luftstrom.

Das bedeutet, dass die Klappe, sofern der Luftstrom nicht geregelt werden soll, sich ausserhalb des Luftstromes befindet und erst dann eingeschwenkt wird, wenn eine Regelung des Luftstromes erfolgen soll, Das bedeutet, dass die Klappe in Ruhelage im Luftstrom keinen Widerstand bildet und es somit auch nicht zu zusätzlichen Strömungsgeräuschen kommt.

Damit die Klappe in den freien Querschnitt des Strömungskanals eingeschwenkt werden kann, weist sie eine Schwenkachse auf. Diese Schwenkachse verläuft bevorzugt quer zur Richtung des Luftstromes.

In einem bevorzugten Ausführungsbeispiel besteht das Regelelement aus einem Gehäuse, in dem sich die Klappe mit der Schwenkachse befindet. Damit ist dieses Regelelement als Einheit ein einen Strömungskanal ein- oder an einen Strömungskanal ansetzbar. Soll kein Volumenstrom geregelt werden, wird die Klappe in das Gehäuse eingeschwenkt. Erst zum Regeln des Volumenstromes erfolgt ein Ausschwenken der Klappe.

In einem bevorzugten Ausführungsbeispiel der Erfindung wird die Schwenkachse durch eine kederartige Verdickung an der Klappe gebildet, welche in einer schalenartigen Aufnahme dreht, die vom Gehäuse abragt. Dabei soll die schalenartige Aufnahme einstückig mit dem Gehäuse verbunden sein, wobei in einem bevorzugten Ausführungsbeispiele das gesamte Gehäuse mit der Aufnahme aus einem Strangpressprofil hergestellt ist.

In einem bevorzugten Ausführungsbeispiel der Erfindung soll die Klappe L-förmig ausgestaltet sein. Das heisst, sie besteht aus einem flachen Schenkelstreifen und einem daran angeformten, leicht gebogenen Schenkel. An den Schenkelstreifen schliesst einends die kederförmige Verdickung an, die einen Teil der Schwenkachse ausbildet.

Zwischen dem Schenkelstreifen und dem gebogenen Schenkel ist durch eine Brücke eine Nut ausgebildet, in die ein Dichtstreifen eingelegt werden kann. Beim Ausfahren der Klappen kann dieser Dichtstreifen entweder einer gegenüberliegenden Klappe oder einer Innenwand des Strömungskanals anliegen und zu einer wirkungsvollen Unterbindung des Luftstromes führen.

Der gebogene Schenkel ist so ausgeformt, dass er kreisbogenartig in einem Radius um die kederförmige Verdickung herum verläuft. Diese Ausgestaltung gewährleistet, dass bei einem Einfahren der Klappe in das Gehäuse die Randkante der Gehäuseöffnung sehr nahe an dem flachen Schenkelstreifen beziehungsweise der Randkante der Klappe liegt, sodass auch hier keine Strömungskante gebildet wird, die zu einer Geräuschentwicklung führen könnte.

An den bogenförmigen Schenkel schliesst bevorzugten noch ein Anschlagstreifen an, mit dem die Klappe nach dem Einfahren in das Gehäuse an einer Innenwand des Gehäuses anliegt.

Eine derartig ausgestaltete Klappe kann ebenfalls einstückig hergestellt sein, bevorzugt aus einem Strangpressprofil.

Im übrigen kann es sich bei der Klappe um beispielsweise einen Volumenstromregler handeln, jedoch bezieht sich die Erfindung vor allem auch darauf, dass die Klappe als Brandschutzklappe ausgestaltet ist. Dabei kann das Klappenblatt selbst entsprechend zusammengesetzt sein, ferner ist dann dieser Brandschutzklappe auch eine handelsübliche Auslösevorrichtung, beispielsweise eine Schmelzlotsicherung od. dgl. zugeordnet.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Seitenansicht einer erfindungsgemässen Vorrichtung zum Führen eines Luftstroms in einem Strömungskanal;
Figur 2 einen vergrössert dargestellten Ausschnitt aus der erfindungsgemässen Vorrichtung gem. Figur 1;
Figur 3 eine Draufsicht auf ein vergrössert dargestelltes Regelelement zum Einsatz in einer erfindungsgemässen Vorrichtung nach Figur 1.

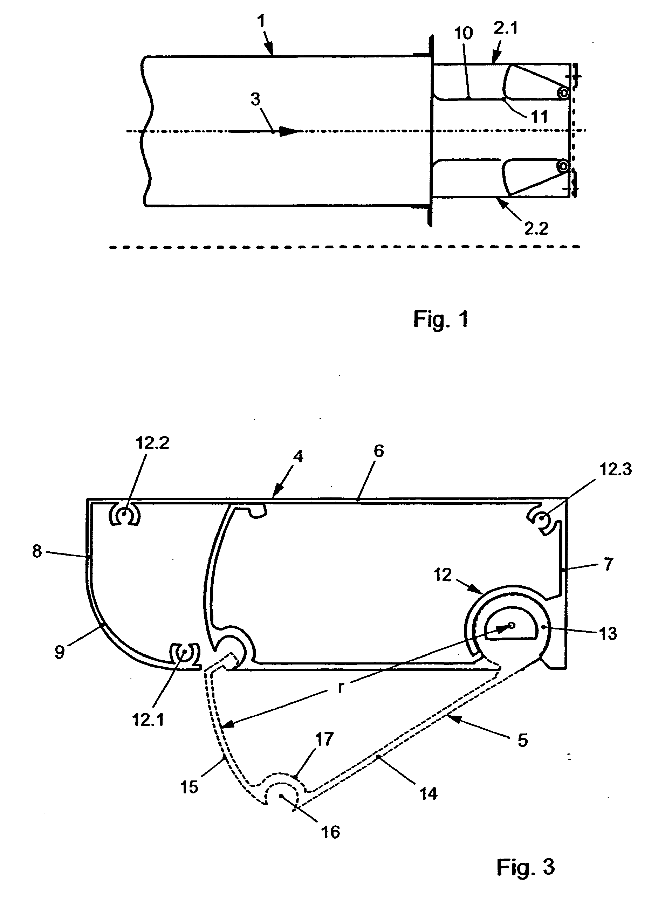

Gem. Figur 1 sind einem Strömungskanal 1 zwei Regelelemente 2.1 und 2.2 zugeordnet. Sowohl der Strömungskanal 1 als auch der Raum zwischen den beiden Regelelemente in 1.1 und 1.2 wird von Luft durchströmt, wie dies durch den Pfeil 3 angedeutet ist.

Beide Regelelemente 2.1 und 2.2 sind identisch ausgebildet, sodass nur eines von ihnen nachfolgenden im Einzelnen beschrieben wird.

Das Regelelement weist ein Gehäuse 4 auf, in welchem eine Klappe 5 schwenkbar gelagert ist. Dabei ist das Gehäuse 4 bevorzugt einstückig ausgebildet. Beispielsweise besteht es aus einem Abschnitt eines Strangpressprofils. Es weist einen Boden 6 und zwei Seitenwände 7 und 8 auf. Die Seitenwand 8 geht unter Ausbildung einer gebogenen Kante 9 in einen Deckstreifen 10 über, der einen Teil des Strömungskanals 1 ausgebildet.

Der Deckstreifen 10 verschliesst allerdings das Gehäuse 4 nicht ganz, sondem lässt zu der Seitenwand 7 hin eine Öffnung 11 frei, in welcher die Klappe 5 schwenkbar gelagert ist.

Dem Gehäuse 4 sind femer verschiedene Aufnahmen 12.1 bis 12.3 zur Aufnahme von beispielsweise Blechschrauben zum Festlegen des Regelelementes 2.1/2.2 zugeordnet.

Von der Seitenwand 7 ragt eine schalenförmige Aufnahme 12 ab, welche zumindest teilweise eine kederartige Verdickung 13 an der Klappe 5 umfängt. Diese kederartige Verdickung 13 dreht in der schalenförmigen Aufnahme 12. Diese Ausgestaltung bildet ein Gelenk, um welches herum die Klappe 5 schwenkbar ist.

Die Klappe 5 ist L-förmige ausgestaltet, wobei ein flacher Schenkelstreifen 14 und ein leicht gebogener Schenkel 15 vorgesehen sind. Der flache Schenkelstreifen 14 ist einends einstückig mit der kederförmige Verdickung 13 verbunden, anderenends schliesst an ihnen über eine eine Nut 16 ausbildende Brücke 17 der Schenkel 15 an. In die Nut 16 kann ein nicht näher gezeigter Dichtstreifen eingelegt werden.

An das freie Ende des gebogenen Schenkels 15 schliesst ein Anschlagstreifen 18 an, der in etwa parallel zu dem flachen Schenkelstreifen 14 verläuft.

Der Schenkel 15 weist eine Biegung auf, die in etwa in einem Radius r um die kederförmige Verdickung herum verläuft.

In Figur 3 ist mit durchgezogenen Linien die Klappe 5 in Ruhelage und gestrichelt in Schliesslage dargestellt.

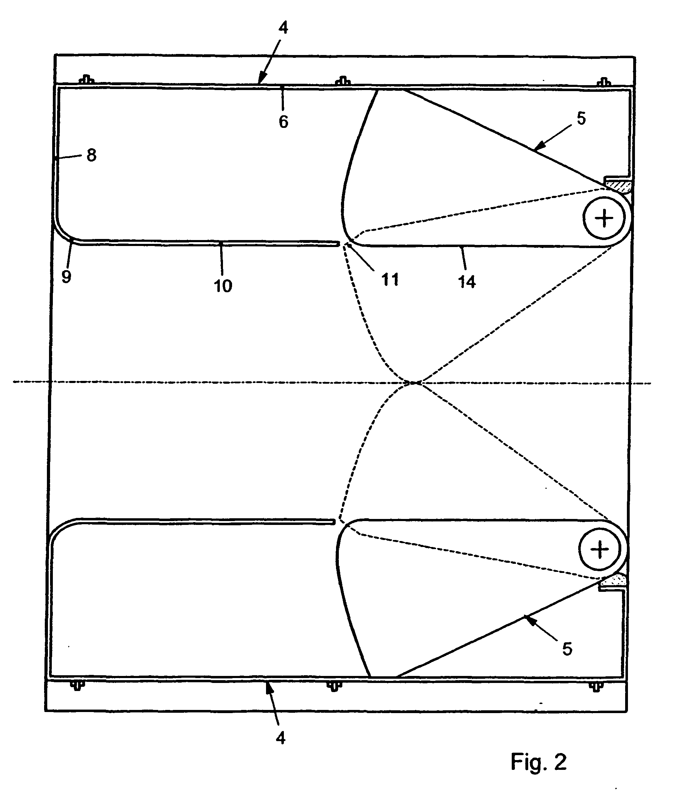

Die Funktionsweise der vorliegenden Erfindung ist folgende:
Zum Verändern eines Volumenstroms im Strömungskanal 1 wird zumindest ein Regelelement angeordnet. Bevorzugt werden allerdings, wie in den Figuren 1 und 2 gezeigt, zumindest zwei Regelelemente 2.1 und 2.2 im oder anschliessend an einen Strömungskanal 1 vorgesehen. Diese beiden Regelelemente 2.1 und2.2 wirken dann zur Bestimmung des Volumenstroms der Luft zusammen. Durch Ausfahren der jeweiligen Klappen 5 in den freien Querschnitt des Strömungskanals wird dieser verkleinert, sodass weniger Luft und/oder Luft schneller den Strömungskanal passieren kann.

Soll keine Verringerung des Volumenstroms der Luft erfolgen, so werden die Klappe 5 in das Gehäuse 4 eingefahren, sodass der Schenkelstreifen 14 in etwa in der Ebene des Deckstreifen 10 liegt und den Volumenstrom in keinster Weise behindert.

Durch die abgerundete beziehungsweise gebogene Kante 9 entgegen der Richtung 3 der Luftströmung findet auch eine sanfte Einengung der Luftströmung statt, sodass es an dieser Stelle zu keinen Strömungs- und Abstrahlgeräuschen kommt. Dementsprechend ist ein derartiges Regelelement als Volumenstromregler und Jalousieklappe auch bei Entspannergeräten einzusetzen.

### Positionszahlenliste

| | | | | | |
|---|---|---|---|---|---|
| 1 | Strömungskanal | 34 | | 67 | |
| 2 | Regelelement | 35 | | 68 | |
| 3 | Pfeil-/Luftströmung | 36 | | 69 | |
| 4 | Gehäuse | 37 | | 70 | |
| 5 | Klappe | 38 | | 71 | |
| 6 | Boden | 39 | | 72 | |
| 7 | Seitenwand | 40 | | 73 | |
| 8 | Seitenwand | 41 | | 74 | |
| 9 | gebogene Kante | 42 | | 75 | |
| 10 | Deckstreifen | 43 | | 76 | |
| 11 | Öffnung | 44 | | 77 | |
| 12 | Aufnahme | 45 | | 78 | |
| 13 | Verdickung | 46 | | 79 | |
| 14 | Schenkelstreifen | 47 | | | |
| 15 | Schenkel | 48 | | | |
| 16 | Nut | 49 | | | |
| 17 | Brücke | 50 | | | |
| 18 | Anschlagstreifen | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Führen eines Luftstroms in einem Strömungskanal (1) mit zumindest einem Regelelement (2.1, 2.2), wobei der Querschnitt des Strömungskanals (1) von dem zumindest einen Regelelement (2.1,2.2) veränderbar ist, wobei
das Regelelement (2.1,2.2) eine Klappe (5) aufweise, die in den freien Querschnitt des Strömungskanals (1) einschwenkbar ist, und wobei sich die Klappe (5) ausserhalb einer Regellage in einem Gehäuse (4) befindet, **dadurch gekennzeichnet, dass** eine gegen die Strömungsrichtung (3) gerichtete freie Kante (9) des Gehäuses (4) abgerundet ist.

2. Vorrichtung nach Anspruch 1, **dadurch gekennzeichnet, dass** die Klappe (6) eine Schwenkachse (13) aufweist, die ausserhalb des freien Querschnitts des Strömungkanals (1) liegt.

3. Vorrichtung nach Anspruch 2, **dadurch gekennzeichnet, dass** die Schwenkachse (13) der Klappe (5) quer zur Richtung (3) des Luftstromes verläuft.

4. Vorrichtung nach einem der Ansprüche 2 oder 3, **dadurch gekennzeichnet, dass** sich auch die Schwenkachse (13) Innerhalb des Gehäuses (4) befindet.

5. Vorrichtung nach Anspruch 4, **dadurch gekennzeichnet, dass** in dem Gehäuse (4) eine halbschalenartige Aufnahme (12) für eine kederartige Verdickung (13) an der Klappe (5) vorgesehen Ist.

6. Vorrichtung nach Anspruch 5, **dadurch gekennzeichnet, dass** die kederartige Verdickung (13) in der halbschalenartigen Aufnahme (12) dreht.

7. Vorrichtung nach Anspruch 5 oder 6, **dadurch gekennzeichnet, dass** die halbschalenartige Aufnahme (12) einstückig mit dem Gehäuse (4) verbunden ist.

8. Vorrichtung nach wenigstens einem der Ansprüche 1 bis 7, **dadurch gekennzeichnet, dass** das Gehäuse (4) In oder an dem Strömungskanal (1) festlegbar ist.

9. Vorrichtung nach wenigstens einem der Ansprüche 1 bis 8, **dadurch gekennzeichnet, dass** die Klappe (6) L-förmig oder U-förmig ausgestaltet ist.

10. Vorrichtung nach Anspruch 9, **dadurch gekennzeichnet, dass** die Klappe (6) einen flachen Schenkelstreifen (14) aufweist, an den einends die kederförmige Verdickung (13) angeformt ist und andererseits ein leicht gebogener Schenkel (15) anschliesst.

11. Vorrichtung nach Anspruch 10, **dadurch gekennzeichnet, dass** sich zwischen dem flachen Schenkelstreifen (14) und dem gebogenen Schenkel (15) eine Nut (16) zur Aufnahme eines Dichtstreifens befindet,

12. Vorrichtung nach Anspruch 10 oder 11, **dadurch gekennzeichnet, dass** die Biegung des Schenkels (15) im Radius (r) um die kederförmige Verdickung (13) herum erfolgt.

13. Vorrichtung nach einem der Ansprüche 10 bis 12, **dadurch gekennzeichnet, dass** an den bogenförmigen Schenkel (15) ein Anschlagstreifen (18) anschliesst, der In etwa parallel zu dem flachen Schenkelstreifen (14) verläuft.

14. Vorrichtung nach wenigstens einem der Ansprüche 1 bis 13, **dadurch gekennzeichnet, dass** es sich bei der Klappe (5) um eine Brandschutzklappe handelt.

## Claims

1. A device for guiding an air flow in a flow duct (1) with at least one regulating element (2.1, 2,2), the cross-section of the flow duct (1) being able to be changed by the at least one regulating element (2.1, 2.2), the regulating element (2.1, 2.2) having a flap (5) which can be pivoted into the free cross-section of the flow duct (1), and the flap (5) outside a regulating position being located in a housing (4), **characterised in that** a free edge (9) of the housing (4) which is directed against the direction of flow (3) is rounded off.

2. A device according to Claim 1, **characterised in that** the flap (5) has a pivot spindle (13) which lies outside the free cross-section of the flow duct (1).

3. A device according to Claim 2, **characterised in that** the pivot spindle (13) of the flap (5) extends transversely to the direction (3) of the air flow.

4. A device according to one of Claims 2 or 3, **characterised in that** the pivot spindle (13) is also located within the housing (4).

5. A device according to Claim 4, **characterised in that** in the housing (4) a half-shell-like receptacle (12) for a bead-like thickened section (13) is provided on the flap (5).

6. A device according to Claim 5, **characterised in that** the bead-like thickened section (13) turns in the half-shell-like receptacle (12).

7. A device according to Claim 5 or 6, **characterised in that** the half-shell-like receptacle (12) is connected in one piece with the housing (4),

8. A device according to at least one of Claims 1 to 7, **characterised in that** the housing (4) can be fixed in or on the flow duct (1).

9. A device according to at least one of Claims 1 to 8, **characterised in that** the flap (5) is of L-shaped or U-shaped configuration.

10. A device according to Claim 9, **characterised in that** the flap (5) has a flat arm strip (14) on which the bead-shaped thickened section (13) is formed at one end, and which is adjoined by a slightly curved arm (15) on the other side.

11. A device according to Claim 10, **characterised in that** a groove (16) for receiving a sealing strip is located between the flat arm strip (14) and the curved arm (15),

12. A device according to Claim 10 or 11, **characterised in that** the curving of the arm (15) takes place at a radius (r) around the bead-shaped thickened section (13).

13. A device according to one of Claims 10 to 12, **characterised in that** a stop strip (18) adjoins the arcuate arm (15), which strip extends approximately parallel to the flat arm strip (14).

14. A device according to at least one of Claims 1 to 13, **characterised in that** the flap (5) is a fire-protection flap.

## Revendications

1. Dispositif de guidage d'un flux d'air dans un canal d'écoulement (1) avec au moins un élément de réglage (2.1, 2.2), la section du canal d'écoulement (1) de l'au moins un élément de réglage (2.1, 2.2) étant variable, l'élément de réglage (2.1, 2.2) présentant un clapet (5) pouvant être pivoté dans la section libre du canal d'écoulement (1), le clapet (5) se trouvant, en-dehors d'une position de réglage, dans un boîtier (4),
**caractérisé par le fait**
**qu'**un bord libre (9) du boîtier (4) orienté dans la direction opposée à la direction d'écoulement (3) est arrondi.

2. Dispositif selon la revendication 1, **caractérisé par le fait que** le clapet (5) présente un axe de pivotement (13) qui se situe en-dehors de la section libre du canal d'écoulement (1).

3. Dispositif selon la revendication 2, **caractérisé par le fait que** l'axe de pivotement (13) du clapet (5) s'étend transversalement à la direction (3) du flux d'air.

4. Dispositif selon l'une des revendications 2 ou 3, **caractérisé par le fait que** l'axe de pivotement (13) se trouve également à l'intérieur du boîtier (4).

5. Dispositif selon la revendication 4, **caractérisé par le fait que** dans le boîtier (4) est prévu un dispositif en demi-coquille (12) pour un épaississement en forme de bourrelet en T (13) au clapet (S).

6. Dispositif selon la revendication 5, **caractérisé par le fait que** l'épaississement en forme de bourrelet en T (13) tourne dans le dispositif en demi-coquille (12).

7. Dispositif selon la revendication 5 ou 6, **caractérisé par le fait que** le dispositif en demi-coquille (12) est assemblé d'une seule pièce avec le boîtier (4).

8. Dispositif selon au moins l'une des revendications 1 à 7, **caractérisé par le fait que** le boîtier (4) peut être fixé dans ou au canal d'écoulement (19.

9. Dispositif selon au moins l'une des revendications 1 à 8, **caractérisé par le fait que** le clapet (6) est réalisé en forme de L ou en forme de U.

10. Dispositif selon la revendication 9, **caractérisé par le fait que** le clapet (6) présente une bande de branche plate (14) à une extrémité de laquelle est formé l'épaississement en forme de bourrelet en T (13) et à l'autre extrémité de laquelle se raccorde une branche légèrement courbée (15)

11. Dispositif selon la revendication 10, **caractérisé par le fait qu'**entre la bande de branche plate (14) et la branche courbée (15) se trouve une rainure (16) destinée à recevoir une bande d'étanchéité.

12. Dispositif selon la revendication 10 ou 11, **caractérisé par le fait que** la courbure de la branche (15) a lieu en rayon (r) autour de l'épaississement en forme de bourrelet en T (13).

13. Dispositif selon l'une des revendications 10 à 12, **caractérisé par le fait qu'**à la branche en forme d'arc (15) se raccorde une bande d'arrêt (18) qui s'étend environ parallèlement à la bande de branche plate (14).

14. Dispositif selon au moins l'une des revendications 1 à 13, **caractérisé par le fait qu'**il s'agit, pour le clapet (5), d'un clapet coupe-feu.
